# EUROPÄISCHE PATENTSCHRIFT

(11) **EP 3 356 886 B1**
(45) Veröffentlichungstag und Bekanntmachung des Hinweises auf die Patenterteilung: **15.06.2022**
(21) Anmeldenummer: 16760671.4
(22) Anmeldetag: 23.08.2016
(51) Int. Cl.: G02B 27/18, G03B 21/14, H04N 9/31, G02B 3/00

(54) **BILDERZEUGUNGSVORRICHTUNG UND VERFAHREN ZUR HERSTELLUNG EINES ARRAYS BILDGEBENDER ELEMENTE**
IMAGE GENERATION DEVICE AND METHOD FOR PRODUCING AN ARRAY OF IMAGE FORMING ELEMENTS
DISPOSITIF DE PRODUCTION D'IMAGE ET PROCÉDÉ POUR RÉALISER UN RÉSEAU D'ÉLÉMENTS DE FORMATION D'IMAGE

(30) Priorität: 30.09.2015 DE 102015218829
(43) Veröffentlichungstag der Anmeldung: 08.08.2018
(73) Patentinhaber: Bayerische Motoren Werke Aktiengesellschaft, 80809 München (DE)
(72) Erfinder: SIELER, Marcel, Menlo Park 94025 (US)
(86) Internationale Anmeldenummer: PCT/EP2016/069847
(87) Internationale Veröffentlichungsnummer: WO 2017/054988

(56) Entgegenhaltungen:
- DE-A1-102007 029 204
- DE-A1-102013 208 625

## Beschreibung

Es wird eine Bilderzeugungsvorrichtung, die ein Array bildgebender Elemente aufweist, angegeben. Weiterhin wird ein Verfahren zur Herstellung eines Arrays bildgebender Elemente angegeben.

Mikrooptische Arrayprojektoren ermöglichen aufgrund ihres Aufbaus im Vergleich zu konventionellen einkanaligen Projektoren scharfe Abbildungen mit einem geringen Lichtverlust. Wie beispielsweise in der Druckschrift DE 10 2009 024 894 A1 beschrieben, weist ein solcher Array-Projektor eine regelmäßige Anordnung projizierender Einzelkanäle auf, deren Projektionen sich auf dem Schirm zum Gesamtbild vereinen. Das ultraflache Array-Projektionsdisplay stellt ein innovatives optisches Konzept zur Realisierung flacher und gleichzeitig heller Projektionssysteme vor.

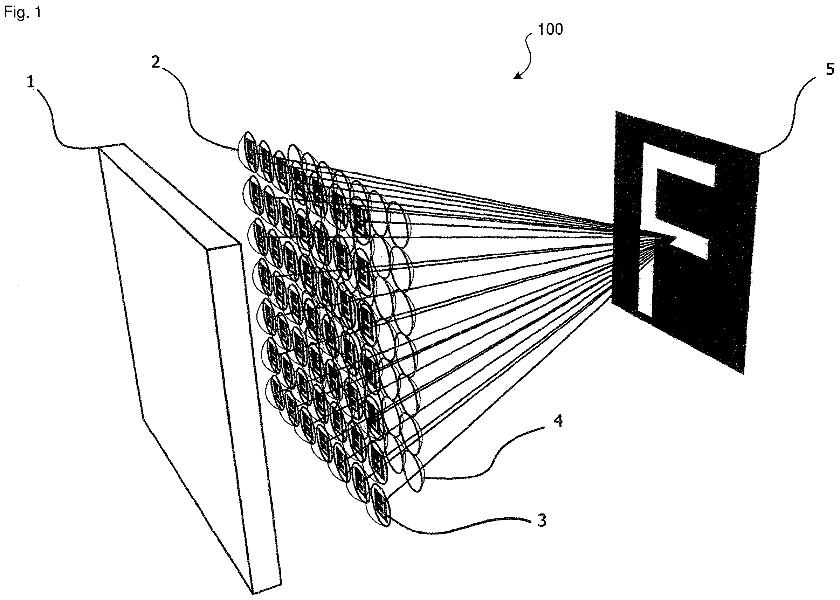

Das Grundprinzip ist schematisch in der Figur 1 dargestellt. Eine Lichtquelle 1 beleuchtet ein Feldlinsenarray 2, in dessen unmittelbarer Nähe sich das Array der bildgebenden Strukturen 3 befindet. Das zu projizierende Objekt befindet sich in der Brennweite der zugeordneten Linse des Projektionslinsenarrays 4. Die korrespondierende Feldlinse befindet sich im Vergleich zum Abstand der Projektionslinse zum Objekt sehr nahe an diesem, um eine Köhlersche Beleuchtung der Projektionslinse zu gewährleisten. Das Projektionslinsenarray bildet eine Überlagerung aller Einzelbilder auf einen Schirm 5 ab.

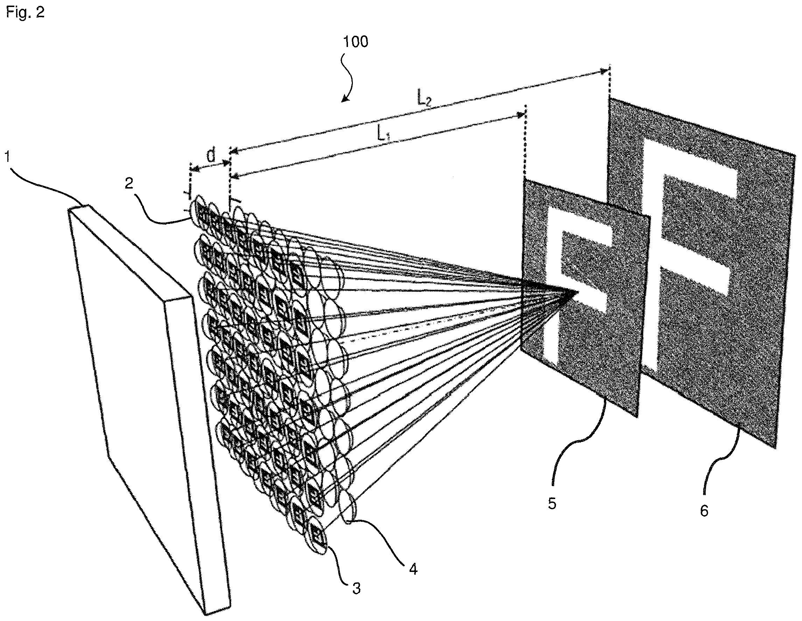

Eine Weiterentwicklung dieser Technik ermöglicht es, zu projizierende Bilder in unterschiedlichen Projektionsentfernungen zu erzeugen. Ein solches System ist z.B. in der Druckschrift DE 10 2013 208 625 A1 beschrieben. Die Erzeugung der Bilder erfolgt statisch, d.h. es ist weder von bildgeberischer Seite, noch von mechanischer Seite eine Umstellung nötig. Hierfür müssen die Einzelbilder des Multikanalprojektionsdisplays geeignet entworfen werden. Dies wird über eine boolesche Verknüpfung der Einzelbilder für die Projektionskanäle des Multiaperturdisplays durchgeführt. Durch die Lichtquelle werden die Informationen über die bildgebenden Elemente Projektionskanalweise zu den endgültigen Einzelbildern in mindestens zwei unterschiedlichen Projektionsentfernungen L1 und L2 kombiniert. Das Prinzip ist schematisch in der Figur 2 gezeigt.

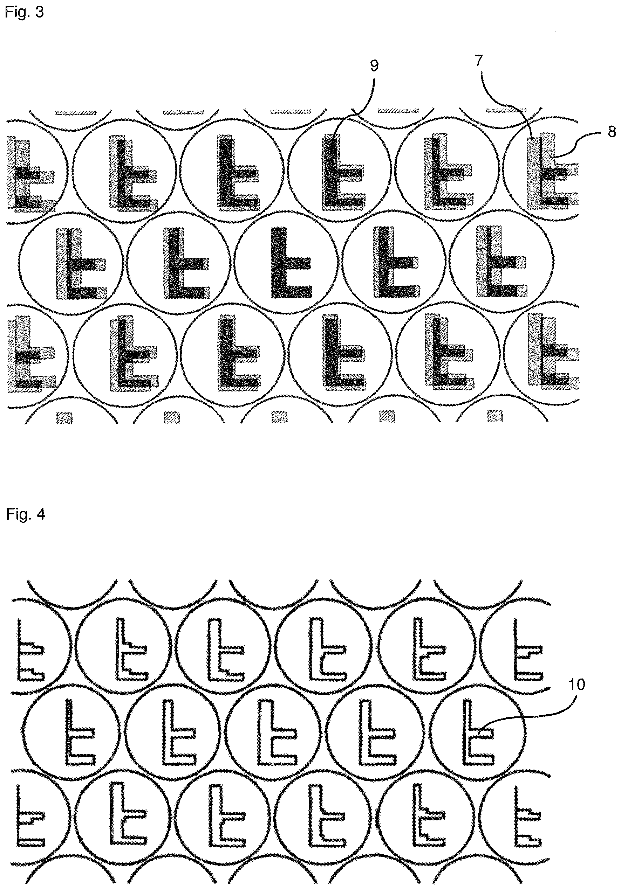

Um die Bilder in die verschiedenen Ebenen zu projizieren, wird eine besondere Erzeugung der Einzelbilder gewählt. Für jede Projektion, welche erzeugt werden soll, wird zunächst das Einzelbild der bildgebenden Elemente berechnet, im gezeigten Beispiel die der zwei Projektionen 5 und 6. Die Rückprojektion in die Objektebenen der Optiken ist in der Figur 3 dargestellt. Die Rückprojektion des einen Bildes ist durch das schraffierte "F" dargestellt (Bezugszeichen 7). Die Rückprojektion des zweiten Bildes ist durch die entgegengesetzte Schraffur 8 dargestellt. Die äußeren Flächen bilden dabei das Bild in der kürzeren Projektionsdistanz ab. Die Überlagerung 10 beider Schraffuren und somit auch die Überlagerung der beiden Rückprojektionen sind in der Figur 3 deutlich zu erkennen.

In diesem Fall handelt es sich um eine logische "Und- Verknüpfung". Bei den einzelnen Schraffierungen handelt es sich um eine Veranschaulichung, welche in dem optischen System nicht genutzt wird. In der Figur 4 ist das Maskenarray mit den transmissiven Flächen 11 dargestellt. In diesem Fall wird der Bereich, in dem sich die Flächen überlagern, als transmissive Flächen beschrieben, da diese in der Anwendung das Licht transmittieren. Es ist deutlich zu erkennen, dass nur die Flächen auf dem Maskenarray transmissiv sind, welche in der Figur 3 mittels der "Und- Verknüpfung" erstellt worden sind. Die Überlagerung des transmittierten Lichtes durch die bildgebenden Elemente ergibt die Bilder in den verschiedenen Projektionsebenen. Diese Ausführung ist auch mit verschiedenen Bildern möglich. So kann auf dem kurzen Projektionsweg ein anderes Bild, z.B. der Buchstabe "A", als auf dem langen Projektionsweg, z.B. der Buchstabe "B", angezeigt werden. Es wird dabei dasselbe optische System sowie die gleiche Art der Verknüpfung der bildgebenden Elemente genutzt.

Nachteilig bei den aus dem Stand der Technik bekannten Multikanalprojektionsdisplays sind die derzeit sehr hohen Anforderungen der lateralen Justierung vom Projektionslinsen-Array zum Array der bildgebenden Elemente während des Herstellprozesses. Weiterhin weisen die aus dem Stand der Technik bekannten Multikanalprojektionsdisplays eine hohe Empfindlichkeit in der Nutzung auf, insbesondere gegenüber Vibrationen, Stößen und dergleichen.

Es ist eine Aufgabe der im Folgenden beschriebenen Ausführungsformen eine Bilderzeugungsvorrichtung anzugeben, die eine erhöhte Toleranz gegenüber Fehlausrichtungen zwischen einem Array bildgebender Elemente und einem Projektionslinsenarray aufweist. Eine weitere Aufgabe ist es, ein Verfahren zur Herstellung eines Arrays bildgebender Elemente anzugeben.

Diese Aufgaben werden durch die Gegenstände gemäß den unabhängigen Patentansprüchen gelöst. Vorteilhafte Ausführungsformen und Weiterbildungen gehen weiterhin aus den abhängigen Patentansprüchen, der nachfolgenden Beschreibung und aus den Zeichnungen hervor.

Eine hier beschriebene Bilderzeugungsvorrichtung weist wenigstens eine Lichtquelle, ein Feldlinsenarray, ein Array bildgebender Elemente sowie ein Projektionslinsenarray auf. Das Feldlinsenarray umfasst dabei eine Mehrzahl an Feldlinsen, das Array bildgebender Elemente umfasst eine Mehrzahl an bildgebenden Elementen und das Projektionslinsenarray umfasst eine Mehrzahl an Projektionslinsen.

Das Array bildgebender Elemente ist gebildet durch eine Überlagerung von einem ersten Musterarray mit einem zweiten Musterarray, welches baugleich zum ersten Musterarray ausgebildet ist und zum ersten Musterarray gedreht ist. Das erste Musterarray und das zweite Musterarray weisen jeweils eine Vielzahl von bildgebenden Elementen auf. Weiterhin sind das erste Musterarray und das zweite Musterarray in Bezug auf die Anzahl, Anordnung, Form und Größe der bildgebenden Elemente identisch aufgebaut. Die Überlagerung ist durch eine logische UND-Verknüpfung gebildet. Der Drehwinkel zwischen dem ersten Musterarray und dem zweiten Musterarray beträgt zwischen 0,005° und 1,0°.

Vorzugsweise ist jeder Feldlinse ein bildgebendes Element zugeordnet, und vorzugsweise ist jedem bildgebenden Element eine Projektionslinse zugeordnet. Die Bilderzeugungsvorrichtung kann beispielsweise als mikrooptischer Arrayprojektor bzw. als Multikanalprojektionsdisplay oder Multiapertur-Projektionsdisplay ausgebildet sein. Die bildgebenden Elemente weisen vorzugsweise jeweils ein Projektionsmuster auf. Die bildgebenden Elemente bzw. die Projektionsmuster können z.B. durch transmissive Flächen gebildet sein. Bei den bildgebenden Elementen handelt es sich also beispielsweise um hinterleuchtbare Schattenmasken. Weiterhin kann es sich bei den bildgebenden Elementen z.B. auch um selbstleuchtende Elemente handeln, wie z. B. um OLEDs oder um Displays.

Vorteilhafterweise werden bei der hier beschriebenen Bilderzeugungsvorrichtung die geometrischen Bauteilanforderungen gegenüber verdrehten und/oder verschobenen Positionen vom Projektionslinsenarray zum Array der bildgebenden Elemente entspannt.

Bei den Musterarrays muss es sich nicht um reale bzw. gegenständliche Arrays bildgebender Elemente handeln, vielmehr reicht es aus, zur Ausbildung des Arrays bildgebender Elemente eine Überlagerung zumindest zweier Musterarrays zu simulieren, um die bildgebenden Elemente des Arrays bildgebender Elemente der hier beschriebenen Bilderzeugungsvorrichtung zu erhalten. Somit können die Musterarrays imaginäre Musterarrays sein. Vorzugsweise sind die sich überlagernden Musterarrays jeweils in derselben Ebene angeordnet.

Gemäß einer weiteren Ausführungsform ist das zweite Musterarray zusätzlich gegenüber dem ersten Musterarray verschoben. Insbesondere können die einzelnen bildgebenden Elemente bzw. Projektionsmuster des zweiten Musterarrays jeweils um denselben Abstand bzw. Translationsweg zu den zugeordneten bildgebenden Elementen bzw. Projektionsmustern des ersten Musterarrays verschoben sein. Im Gegensatz hierzu sind die verschiedenen zweiten Rückprojektionen 8 aus der Figur 3 zu den verschiedenen ersten Rückprojektionen 7 jeweils um unterschiedlich große Translationswege verschoben.

Gemäß einer weiteren Ausführungsform ist das Array bildgebender Elemente durch eine Überlagerung dreier Musterarrays gebildet. Insbesondere kann das Array bildgebender Elemente durch eine Überlagerung eines ersten, zweiten und dritten Musterarrays gebildet sein, wobei die drei Musterarrays jeweils baugleich ausgebildet sind. Die drei Musterarrays können beispielsweise jeweils eine Mehrzahl bildgebender Elemente aufweisen und in Bezug auf die bildgebenden Elemente identisch aufgebaut sein, insbesondere hinsichtlich der Anzahl, Größe, Form und Anordnung der bildgebenden Elemente. Die bildgebenden Elemente des Arrays bildgebender Elemente der hier beschriebenen Bilderzeugungsvorrichtung können durch eine Überlagerung der bildgebenden Elemente der drei Musterarrays gebildet sein. Die Überlagerung kann z.B. durch eine logische UND-Verknüpfung gebildet sein. Beispielsweise wird die logische UND-Verknüpfung durch die Schnittmenge der bildgebenden Elemente des ersten Musterarrays, der bildgebenden Elemente des zweiten Musterarrays und der bildgebenden Elemente des dritten Musterarrays, bzw. der jeweiligen Projektionsmuster oder transmissiven Flächen, gebildet. Bei den Musterarrays muss es sich hierbei nicht um reale bzw. gegenständliche Arrays bildgebender Elemente handeln, vielmehr kann zur Ausbildung des Arrays bildgebender Elemente der hier beschriebenen Bilderzeugungsvorrichtung die Überlagerung von Musterarrays simuliert werden.

Gemäß einer weiteren Ausführungsform ist das zweite Musterarray zum ersten Musterarray um einen Drehwinkel zwischen 0,005° und 1,0° gedreht, und das dritte Musterarray ist zum ersten Musterarray um einen Drehwinkel zwischen -0,005° und -1,0° gedreht. Besonders bevorzugt sind die Drehwinkel zwischen dem zweiten und ersten Musterarray und zwischen dem dritten und ersten Musterarray betragsmäßig gleich groß.

Weiterhin wird ein Array bildgebender Elemente angegeben. Das Array bildgebender Elemente kann eines oder mehrere Merkmale der im Zusammenhang mit dem Array bildgebender Elemente der Bilderzeugungsvorrichtung genannten Ausführungsformen aufweisen. Insbesondere ist das Array bildgebender Elemente durch eine Überlagerung von einem ersten Musterarray mit einem zweiten Musterarray gebildet, wobei das zweite Musterarray zum ersten Musterarray gedreht ist und wobei das erste und das zweite Musterarray baugleich ausgebildet sind.

Des Weiteren wird ein Verfahren zur Herstellung einer hier beschriebenen Bilderzeugungsvorrichtung angegeben. Das Array bildgebender Elemente der Bilderzeugungsvorrichtung weist dabei die in Anspruch 10 genannten Merkmale auf.

Bei dem Verfahren wird ein Array bildgebender Elemente durch ein Überlagern eines ersten Musterarrays mit einem zweiten Musterarray, das zum ersten Musterarray gedreht ist ausgebildet.

Dabei weisen das erste Musterarray und das zweite Musterarray jeweils eine Vielzahl von bildgebenden Elementen auf. Das erste Musterarray und das zweite Musterarray sind in Bezug auf die Anzahl, Anordnung, Form und Größe der bildgebenden Elemente identisch aufgebaut, und die Überlagerung ist durch eine logische UND-Verknüpfung gebildet. Weiterhin beträgt der Drehwinkel zwischen dem ersten Musterarray und dem zweiten Musterarray zwischen 0,005° und 1,0°. Zusätzlich kann das zweite Musterarray zum ersten Musterarray auch um einen vorgegebenen Translationsweg verschoben sein.

Das Überlagern des ersten Musterarrays und des zweiten Musterarrays bzw. der bildgebenden Elemente der Musterarrays kann beispielsweise mittels einer Simulation erfolgen. Somit müssen die Musterarrays und ihre bildgebenden Elemente nicht als gegenständliche Musterarrays vorliegen, vielmehr kann das Array bildgebender Elemente der hier beschriebenen Bilderzeugungsvorrichtung mittels der Simulation gebildet werden.

Gemäß einer weiteren Ausführungsform werden zur Ausbildung des Arrays bildgebender Elemente drei Musterarrays überlagert, welche jeweils zueinander gedreht sind. Beispielsweise können die bildgebenden Elemente des Arrays bildgebender Elemente durch eine Überlagerung der bildgebenden Elemente der drei Musterarrays gebildet werden.

Weitere Vorteile und vorteilhafte Ausführungsformen der hier beschriebenen Bilderzeugungsvorrichtung sowie des Verfahrens zur Herstellung eines Arrays bildgebender Elemente ergeben sich aus den im Folgenden in Verbindung mit den Figuren 1 bis 5C beschriebenen Ausführungsformen. Es zeigen:
- Fig. 1 und 2: schematische Darstellungen von Bilderzeugungsvorrichtungen gemäß dem Stand der Technik,
- Fig. 3 und 4: schematische Darstellungen von Überlagerungen von Rückprojektionen auf die bildgebenden Elemente der Bilderzeugungsvorrichtung aus Figur 2, und
- Fig. 5A bis 7B: schematische Darstellungen von sich überlagernden Musterarrays zur Bildung eines Arrays bildgebender Elemente gemäß verschiedenen Ausführungsbeispielen.

In den Ausführungsbeispielen und Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen. Vielmehr können einzelne Elemente zur besseren Darstellbarkeit und/oder zum besseren Verständnis übertrieben dick oder groß dimensioniert dargestellt sein.

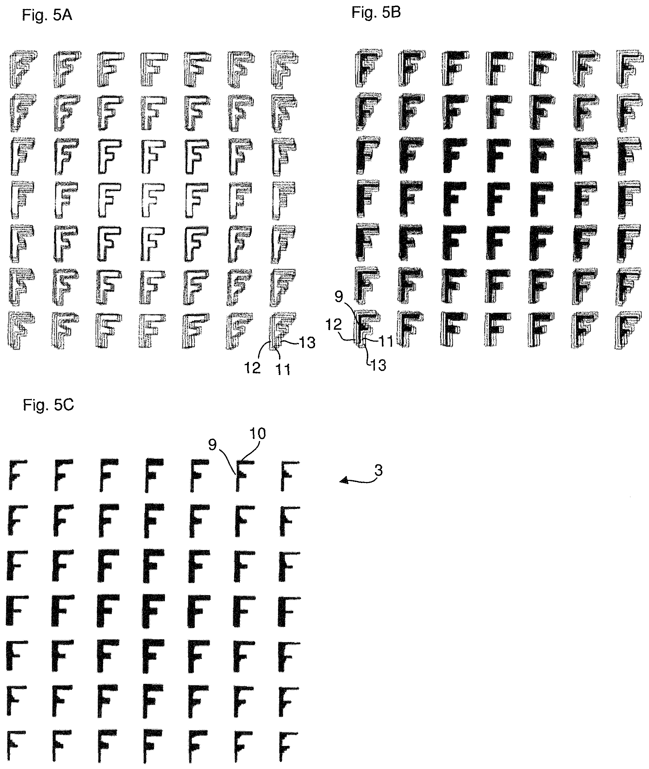

Die Figuren 5A bis 5C zeigen schematische Darstellungen eines Verfahrens zur Ausbildung eines Arrays bildgebender Elemente 3 einer hier beschriebenen Bilderzeugungsvorrichtung 100 gemäß einem Ausführungsbeispiel. Die Bilderzeugungsvorrichtung 100 kann vom Grundaufbau her beispielsweise wie das in Figur 1 gezeigte Multiapertur-Projektionsdisplay ausgebildet sein und weist vorzugsweise zumindest eine Lichtquelle 1, ein Feldlinsenarray 2, ein Array bildgebender Elemente 3 sowie ein Projektionslinsenarray 4 auf.

Zur Ausbildung des Arrays bildgebender Elemente 3 wird hierbei ein erstes Musterarray mit einem zweiten Musterarray und mit einem dritten Musterarray, welche jeweils baugleich zum ersten Musterarray ausgebildet sind und zum ersten Musterarray gedreht sind, überlagert. Das erste Musterarray weist eine Vielzahl von bildgebenden Elementen 11 auf. Das zweite Musterarray weist eine Vielzahl von bildgebenden Elementen 12 auf und das dritte Musterarray weist eine Vielzahl von bildgebenden Element 13 auf. Das erste, zweite und dritte Musterarray sind insbesondere hinsichtlich der Anzahl, Anordnung Größe und Form der bildgebenden Elemente 11, 12, 13 identisch aufgebaut. In der Figur 5A sind die bildgebenden Elemente 11, 12, 13 der 3 Musterarrays gezeigt, wobei gut zu erkennen ist, dass das zweite Musterarray und das dritte Musterarray jeweils zum ersten Musterarray gedreht sind. In dem im Zusammenhang mit den Figuren 5A bis 5C gezeigten Ausführungsbeispiel stellen die einzelnen bildgebenden Elemente der Musterarrays jeweils den Buchstaben "F" dar. Bei den Musterarrays muss es sich nicht um reale Arrays handeln, vielmehr können die Musterarrays imaginäre Musterarrays sein.

Erfindungsgemäß beträgt der Drehwinkel zwischen dem ersten Musterarray und dem zweiten Musterarray zwischen 0,005° und 1,0°. Der Drehwinkel zwischen dem dritten Musterarray und dem ersten Musterarray beträgt vorzugsweise zwischen -0,005° und -1,0°. Besonders bevorzugt sind der Drehwinkel zwischen dem zweiten und dem ersten Musterarray und der Drehwinkel zwischen dem dritten und dem ersten Musterarray vom Betrag her gleich groß.

In der Figur 5B ist die Überlagerung 9, die eine Verknüpfung der bildgebenden Elemente 11, 12, 13 der drei Musterarrays mittels einer UND-Verknüpfung darstellt, als geschwärzte Fläche gezeigt. Die bildgebenden Elemente des Arrays bildgebender Elemente der hier beschriebenen Bilderzeugungsvorrichtung werden somit durch die Überlagerung der bildgebenden Elemente 11, 12, 13 des ersten, zweiten und dritten Musterarrays gebildet.

Die Figur 5C zeigt Überlagerung 9 aus der aus der Figur 5B. Diese Überlagerung 9 bildet die Form der bildgebenden Elemente bzw. der transmissiven Flächen 10 der bildgebenden Elemente der hier beschriebenen Bilderzeugungsvorrichtung 100. Dabei ist gut zu erkennen, dass weiter außen liegende bildgebende Elemente aufgrund der und Verknüpfung der zueinander gedrehten Musterarrays im Vergleich zu den ursprünglichen bildgebenden Elementen der einzelnen Musterarrays stärker abgewandelt sind als innenliegende bildgebende Elemente. Während die einzelnen bildgebenden Elemente 11, 12, 13 der Musterarrays jeweils identisch ausgebildet sind, unterscheiden sich die einzelnen bildgebenden Elemente des Arrays bildgebender Elemente der hier beschriebenen Bilderzeugungsvorrichtung welche durch die Überlagerung 9 der Musterarrays gebildet werden, voneinander.

Durch das in der Figur 5C gezeigte Maskenarray wird es ermöglicht, dass bei der Justierung zwischen dem Projektionslinsenarray und dem Array der bildgebenden Elemente trotz einer leichten Verdrehung der Projektionslinsen zu den bildgebenden Elementen dennoch ein scharfes Bild projiziert wird und somit eine erhöhte Toleranz gegenüber Misalignment erreicht wird.

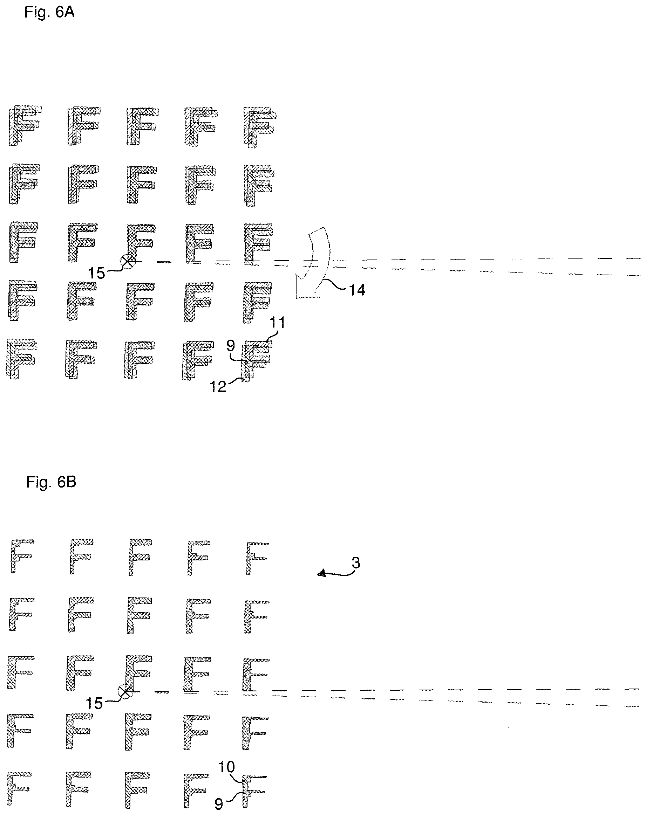

Die Figuren 6A und 6B zeigen schematische Darstellungen eines Verfahrens zur Ausbildung eines Arrays bildgebender Elemente 3 einer hier beschriebenen Bilderzeugungsvorrichtung 100 gemäß einem weiteren Ausführungsbeispiel.

Zur Ausbildung des Arrays bildgebender Elemente 3 wird hierbei ein erstes Musterarray mit einem zweiten Musterarray, welches baugleich zum ersten Musterarray ausgebildet und zum ersten Musterarray bezüglich einer Drehachse 15 gedreht ist, überlagert. Das erste Musterarray weist eine Vielzahl von bildgebenden Elementen 11 auf und das zweite Musterarray weist eine Vielzahl von bildgebenden Elementen 12 auf. Das erste und zweite Musterarray sind hinsichtlich der Anzahl, Anordnung Größe und Form der bildgebenden Elemente 11, 12 identisch aufgebaut.

Die Drehachse 15 ist senkrecht zum ersten Musterarray ausgebildet, insbesondere senkrecht zu einer Ebene, in der die bildgebenden Elemente 11 des ersten Musterarrays angeordnet sind. Weiterhin verläuft die Drehachse 15 durch das erste Musterarray, und zwar insbesondere durch einen Mittelpunkt bzw. ein Zentrum des ersten Musterarrays.

Im gezeigten Ausführungsbeispiel gemäß den Figuren 6A und 6B ist das zweite Musterarray zum ersten Musterarray um einen Drehwinkel gedreht, welcher 2,0° beträgt.

Die Überlagerung des ersten und zweiten Musterarrays, welche eine Verknüpfung der bildgebenden Elemente 11, 12 der zwei Musterarrays mittels einer UND-Verknüpfung darstellt, ist mit dem Bezugszeichen "9" versehen. Die in der Figur 6B dargestellten bildgebenden Elemente bzw. die transmissiven Flächen 10 der bildgebenden Elemente des Arrays bildgebender Elemente 3 werden also durch die Überlagerung 9 der bildgebenden Elemente 11, 12 des ersten und zweiten Musterarrays gebildet.

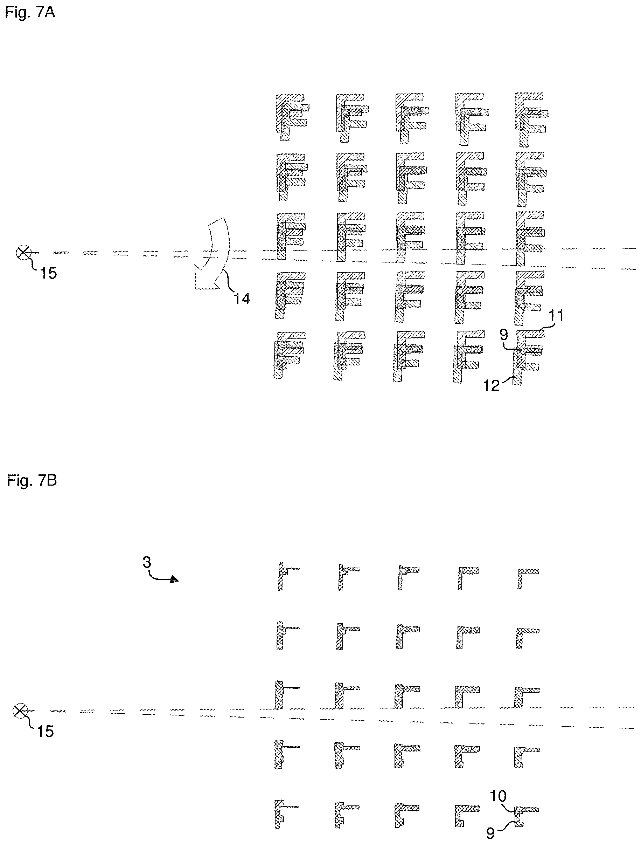

In den Figuren 7A und 7B sind schematische Darstellungen eines hier beschriebenen Verfahrens zur Ausbildung eines Arrays bildgebender Elemente 3 gemäß einem weiteren Ausführungsbeispiel gezeigt.

Im Unterschied zu dem im Zusammenhang mit den Figuren 6A und 6B gezeigten Ausführungsbeispiel verläuft die Drehachse 15, bezüglich der das zweite Musterarray zum ersten Musterarray gedreht ist, durch einen Bereich außerhalb des ersten Musterarrays, d.h. es gibt keinen Schnittpunkt zwischen der Drehachse 15 und dem ersten Musterarray

Die in den gezeigten Ausführungsbeispielen beschriebenen Merkmale können gemäß weiteren Ausführungsbeispielen auch miteinander kombiniert sein. Alternativ oder zusätzlich können die in den Figuren gezeigten Ausführungsbeispiele weitere Merkmale gemäß den Ausführungsformen der allgemeinen Beschreibung aufweisen.

### Bezugszeichenliste

- 1: Lichtquelle
- 2: Feldlinsenarray
- 3: Array bildgebender Elemente
- 4: Projektionslinsenarray
- 5: Projektionsschirm
- 6: weiterer Projektionsschirm
- 7: erste Rückprojektion
- 8: zweite Rückprojektion
- 9: Überlagerung
- 10: transmissive Flächen
- 11: bildgebendes Element des ersten Musterarrays
- 12: bildgebendes Element des zweiten Musterarrays
- 13: bildgebendes Element des dritten Musterarrays
- 14: Drehung
- 15: Drehachse

- 100: Bilderzeugungsvorrichtung

## Patentansprüche

1. Bilderzeugungsvorrichtung (100), aufweisend
- zumindest eine Lichtquelle (1),
- ein Feldlinsenarray (2),
- ein Array bildgebender Elemente (3), und
- ein Projektionslinsenarray (4),
**dadurch gekennzeichnet, dass**
das Array bildgebender Elemente (3) gebildet ist durch eine Überlagerung von einem ersten Musterarray mit einem zweiten Musterarray, welches zum ersten Musterarray gedreht ist,
wobei das erste Musterarray und das zweite Musterarray jeweils eine Vielzahl von bildgebenden Elementen (11, 12) aufweisen,
wobei das erste Musterarray und das zweite Musterarray in Bezug auf die Anzahl, Anordnung, Form und Größe der bildgebenden Elemente identisch aufgebaut sind,
wobei die Überlagerung durch eine logische UND-Verknüpfung gebildet ist, und
wobei der Drehwinkel zwischen dem ersten Musterarray und dem zweiten Musterarray zwischen 0,005° und 1,0° beträgt.

2. Bilderzeugungsvorrichtung nach Anspruch 1, wobei das zweite Musterarray zum ersten Musterarray bezüglich einer Drehachse (15) gedreht ist, die senkrecht zum ersten Musterarray ausgebildet ist, insbesondere senkrecht zu einer Ebene, in der bildgebende Elemente des ersten Musterarrays angeordnet sind.

3. Bilderzeugungsvorrichtung nach Anspruch 2, wobei die Drehachse (15) durch das erste Musterarray verläuft.

4. Bilderzeugungsvorrichtung nach Anspruch 2, wobei die Drehachse (15) außerhalb des ersten Musterarrays verläuft.

5. Bilderzeugungsvorrichtung nach einem der vorhergehenden Ansprüche, wobei das zweite Musterarray gegenüber dem ersten Musterarray verschoben ist.

6. Bilderzeugungsvorrichtung nach einem der vorhergehenden Ansprüche, wobei das Array bildgebender Elemente (3) durch eine Überlagerung dreier Musterarrays, d.h. eines ersten, zweiten und dritten Musterarrays, die jeweils zueinander gedreht sind, gebildet ist.

7. Bilderzeugungsvorrichtung nach Anspruch 6, wobei die drei Musterarrays baugleich ausgebildet sind.

8. Bilderzeugungsvorrichtung nach einem der Ansprüche 6 oder 7, wobei das dritte Musterarray zum ersten Musterarray um einen Drehwinkel zwischen -0,005° und -1,0° gedreht ist.

9. Bilderzeugungsvorrichtung nach einem der Ansprüche 6 bis 8, wobei der Drehwinkel zwischen dem zweiten und dem ersten Musterarray und der Drehwinkel zwischen dem dritten und ersten Musterarray vom Betrag gleich groß sind.

10. Verfahren zur Herstellung einer Bilderzeugungsvorrichtung (100) gemäß einem der vorhergehenden Ansprüche , aufweisend die folgenden Schritte:
- Ausbilden eines Arrays bildgebender Elemente (3) durch Überlagern eines ersten Musterarrays mit einem zweiten Musterarray, das zum ersten Musterarray gedreht ist,
- wobei das erste Musterarray und das zweite Musterarray jeweils eine Vielzahl von bildgebenden Elementen (11, 12) aufweisen,
- wobei das erste Musterarray und das zweite Musterarray in Bezug auf die Anzahl, Anordnung, Form und Größe der bildgebenden Elemente (11, 12) identisch aufgebaut sind,
- wobei die Überlagerung durch eine logische UND-Verknüpfung gebildet ist, und
- wobei der Drehwinkel zwischen dem ersten Musterarray und dem zweiten Musterarray zwischen 0,005° und 1,0° beträgt.

11. Verfahren nach Anspruch 10, wobei zur Ausbildung des Arrays bildgebender Elemente drei jeweils zueinander gedrehte Musterarrays überlagert werden.

## Claims

1. Image generation device (100) having
- at least one light source (1),
- a field lens array (2),
- an array of image-forming elements (3), and
- a projection lens array (4),
**characterized in that**
the array of image-forming elements (3) is formed by superimposing a first pattern array and a second pattern array, which is rotated with respect to the first pattern array,
the first pattern array and the second pattern array each having a multiplicity of image-forming elements (11, 12),
the first pattern array and the second pattern array having an identical structure with respect to the number, arrangement, shape and size of the image-forming elements,
the superimposition being formed by means of a logical AND combination, and
the angle of rotation between the first pattern array and the second pattern array being between 0.005° and 1.0°.

2. Image generation device according to Claim 1, the second pattern array being rotated with respect to the first pattern array with regard to an axis of rotation (15) which is perpendicular to the first pattern array, in particular perpendicular to a plane in which image-forming elements in the first pattern array are arranged.

3. Image generation device according to Claim 2, the axis of rotation (15) running through the first pattern array.

4. Image generation device according to Claim 2, the axis of rotation (15) running outside the first pattern array.

5. Image generation device according to one of the preceding claims, the second pattern array being shifted with respect to the first pattern array.

6. Image generation device according to one of the preceding claims, the array of image-forming elements (3) being formed by superimposing three pattern arrays, that is to say a first, a second and a third pattern array which are each rotated with respect to one another.

7. Image generation device according to Claim 6, the three pattern arrays being structurally identical.

8. Image generation device according to either of Claims 6 and 7, the third pattern array being rotated with respect to the first pattern array through an angle of rotation of between -0.005° and -1.0°.

9. Image generation device according to one of Claims 6 to 8, the angle of rotation between the second and first pattern arrays and the angle of rotation between the third and first pattern arrays being of the same magnitude.

10. Method for producing an image generation device (100) according to one of the preceding claims, having the following step of:
- forming an array of image-forming elements (3) by superimposing a first pattern array and a second pattern array, which is rotated with respect to the first pattern array,
- the first pattern array and the second pattern array each having a multiplicity of image-forming elements (11, 12),
- the first pattern array and the second pattern array having an identical structure with respect to the number, arrangement, shape and size of the image-forming elements (11, 12),
- the superimposition being formed by means of a logical AND combination, and
the angle of rotation between the first pattern array and the second pattern array being between 0.005° and 1.0°.

11. Method according to Claim 10, three pattern arrays which are each rotated with respect to one another being superimposed in order to form the array of image-forming elements.

## Revendications

1. Dispositif de génération d'images (100) comportant
- au moins une source de lumière (1),
- un réseau de lentilles de champ (2),
- un réseau d'éléments d'imagerie (3), et
- un réseau de lentilles de projection (4),
**caractérisé en ce que**
le réseau d'éléments d'imagerie (3) est formé par superposition d'un premier réseau de motifs à un deuxième réseau de motifs qui est tourné par rapport au premier réseau de motifs,
le premier réseau de motifs et le deuxième réseau de motifs comportant chacun un grand nombre d'éléments d'imagerie (11, 12),
le premier réseau de motifs et le deuxième réseau de motifs étant construits de manière identique quant au nombre, à la disposition, à la forme et à la taille des éléments d'imagerie,
la superposition étant formée par une opération logique ET, et
l'angle de rotation entre le premier réseau de motifs et le deuxième réseau de motifs étant compris entre 0,005° et 1,0°.

2. Dispositif de génération d'images selon la revendication 1, le deuxième réseau de motifs étant tourné par rapport au premier réseau de motifs relativement à un axe de rotation (15) qui est formé perpendiculairement au premier réseau de motifs, notamment perpendiculairement à un plan dans lequel sont disposés des éléments d'imagerie du premier réseau de motifs.

3. Dispositif de génération d'images selon la revendication 2, l'axe de rotation (15) s'étendant à travers le premier réseau de motifs.

4. Dispositif de génération d'images selon la revendication 2, l'axe de rotation (15) s'étendant à l'extérieur du premier réseau de motifs.

5. Dispositif de génération d'images selon l'une des revendications précédentes, le deuxième réseau de motifs étant décalé par rapport au premier réseau de motifs.

6. Dispositif de génération d'images selon l'une des revendications précédentes, le réseau d'éléments d'imagerie (3) étant formé par superposition de trois réseaux de motifs, c'est-à-dire un premier, un deuxième et un troisième réseau de motifs, qui sont chacun tournés l'un par rapport à l'autre.

7. Dispositif de génération d'images selon la revendication 6, les trois réseaux de motifs étant construits de manière identique.

8. Dispositif de génération d'images selon l'une des revendications 6 et 7, le troisième réseau de motifs étant tourné d'un angle de rotation compris entre -0,005° et -1,0° par rapport au premier réseau de motifs.

9. Dispositif de génération d'images selon l'une des revendications 6 à 8, l'angle de rotation entre le deuxième et le premier réseau de motifs et l'angle de rotation entre le troisième et le premier réseau de motifs étant égaux en valeur absolue.

10. Procédé de fabrication d'un dispositif de génération d'images (100) selon l'une des revendications précédentes, ledit procédé comprenant les étapes suivantes :
- former un réseau d'éléments d'imagerie (3) par superposition d'un premier réseau de motifs à un deuxième réseau de motifs qui est tourné par rapport au premier réseau de motifs,
- le premier réseau de motifs et le deuxième réseau de motifs comportant chacun un grand nombre d'éléments d'imagerie (11, 12),
- le premier réseau de motifs et le deuxième réseau de motifs étant construits de manière identique quant au nombre, à la disposition, à la forme et à la taille des éléments d'imagerie (11, 12),
- la superposition étant formée par une opération logique ET, et
- l'angle de rotation entre le premier réseau de motifs et le deuxième réseau de motifs étant compris entre 0,005° et 1,0°.

11. Procédé selon la revendication 10, trois réseaux de motifs qui sont tournés les uns par rapport aux autres étant superposés pour former le réseau d'éléments d'imagerie.
